# EUROPÄISCHE PATENTSCHRIFT

(11) **EP 1 207 343 B1**
(45) Veröffentlichungstag und Bekanntmachung des Hinweises auf die Patenterteilung: **20.12.2006**
(21) Anmeldenummer: 01126671.5
(22) Anmeldetag: 08.11.2001
(51) Int. Cl.: F23K 5/00, F16K 27/08, F23N 5/26

(54) **Gasventil sowie Verschlussvorrichtung für ein Gasventil**
Gas valve and closure device for gas valve
Soupape à gaz et dispositif de fermeture pour une soupape à gaz

(30) Priorität: 11.11.2000 DE 10056065
(43) Veröffentlichungstag der Anmeldung: 22.05.2002
(73) Patentinhaber: Honeywell Technologies Sarl, 1110 Morges (CH)
(72) Erfinder: Capel, Denis, 7814 XM Emmen (NL)
(74) Vertreter: TBK-Patent

(56) Entgegenhaltungen:
- DE-A- 2 601 725
- US-A- 3 187 570

## Beschreibung

Die Erfindung betrifft eine Verschlußvorrichtung für ein Gasventil gemäß dem Oberbegriff des Anspruchs 1 und ein Gasventil gemäß dem Oberbegriff des Anspruch 3. Ein solches Ventil ist aus Dokument DE-A-2 601 725 schon bekannt.

An Gasventilen sind Meßbohrungen vorgesehen, um z.B. die am Gasventil herrschenden Druckverhältnisse messen zu können. Diese Meßbohrungen sind von entsprechenden Verschlußvorrichtung verschlossen. Aus Sicherheitsgründen ist es erforderlich, daß die Meßbohrung auch dann, wenn die Verschlußvorrichtung verloren gegangen ist, nur einen vernachlässigbar kleinen Gasaustritt zuläßt. Hierzu muß die Meßbohrung klein ausgebildet sein und mit hoher Genauigkeit in das Gasventil eingebracht werden. Aus Kostengründen ist dies jedoch nachteilig, da das Einbringen derart kleiner Meßbohrung in das Gasventil nur mit hohem Fertigungsaufwand möglich ist.

Der vorliegenden Erfindung liegt das Problem zu Grunde, eine Verschlußvorrichtung für ein Gasventil sowie ein Gasventil zu schaffen, die sowohl den Sicherheitsanforderungen als auch den Kostenanforderangen Rechnung tragen.

Dieses Problem wird durch eine Verschlußvorrichtung mit den Merkmalen des Anspruchs 1 und durch ein Gasventil mit den Merkmalen des Anspruchs 3 gelöst.

Bevorzugte Weiterbildungen der Erfindung ergeben sich aus den Unteransprüchen und der Beschreibung. Nachfolgend wird ein bevorzugtes Ausführungsbeispiel der Erfindung anhand der Zeichnung näher erläutert. In der Zeichnung zeigt:
- Fig. 1: eine erfindungsgemäße Verschlußvorrichtung für ein Gasventil im Querschnitt,
- Fig. 2: das Detail II der Verschlußvorrichtung gemäß Fig. 1,
- Fig. 3: eine Meßbohrung eines Gasventils im Querschnitt,
- Fig. 4: eine Meßbohrung eines Gasventils mit einer teilweise eingebrachten Verschlußvorrichtung im Querschnitt,
- Fig. 5: eine Meßbohrung eines Gasventils mit einer vollständig eingebrachten Verschlußvorrichtung im Querschnitt, und
- Fig. 6: das Detail VI der Fig.5.

Gasventile verfügen in der Regel über mehrere Meßstutzen, wobei an den Meßstutzen Meßgeräte anschließbar sind, mit Hilfe denen die Druckverhältnisse am Gasventil gemessen werden können.

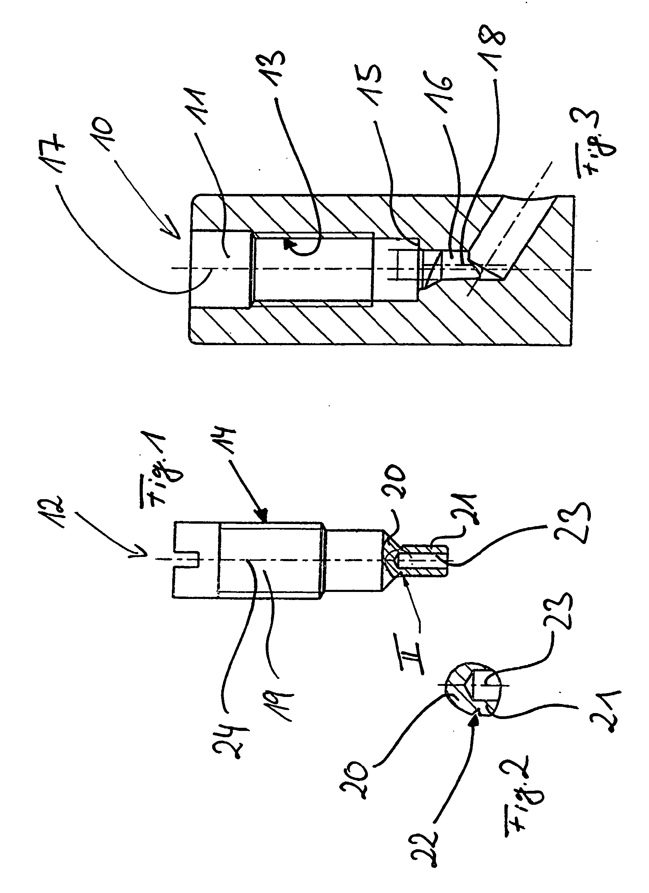

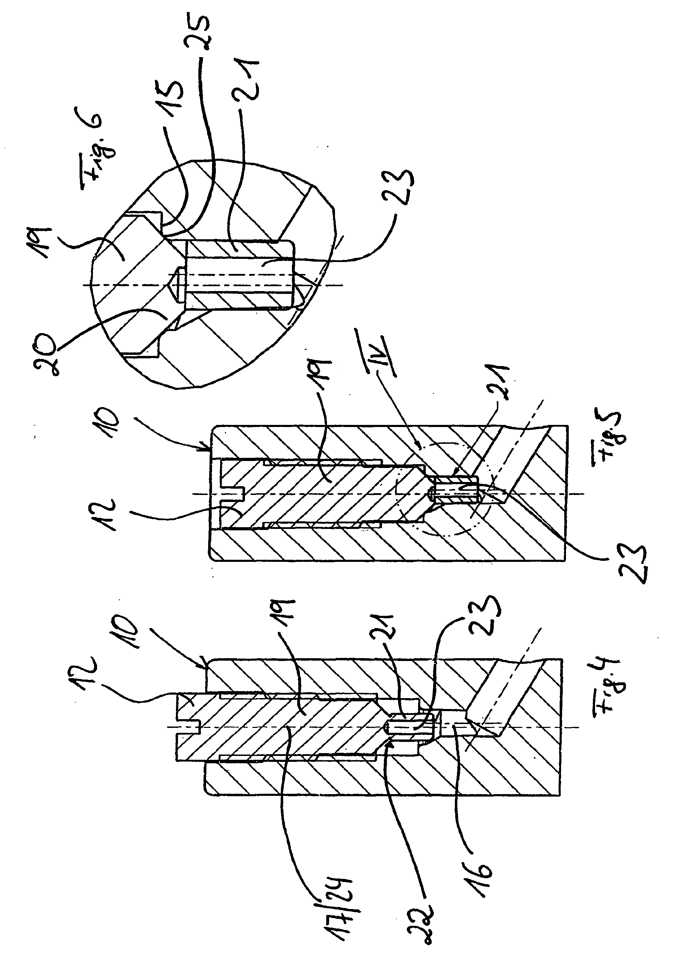

Fig. 3 zeigt einen Meßstutzen 10 eines weiter nicht im Detail dargestellten Gasventils. Zur Bildung des Meßstutzens 10 ist in das Gasventil eine erste Bohrung 11 eingebracht. In die erste Bohrung 11 ist eine Verschlußeinrichtung 12 für den Meßstutzen 10 einbringbar. Hierzu verfügt die Bohrung 11 über ein Innengewinde 13, welches mit einem entsprechenden Außengewinde 14 der Verschlußvorrichtung 12 zusammenwirkt.

Gemäß Fig. 3 wird die erste Bohrung 11 an einem unteren Ende derselben durch einen Absatz 15 begrenzt. An diesem Absatz 15 geht die erste Bohrung 11 in eine zweite Bohrung 16 über. Fig. 3 kann entnommen werden, daß der Innendurchmesser der zweiten Bohrung 16 kleiner ist als der Innendurchmesser der ersten Bohrung 11.

Für die Funktion der Erfindung ist es von Bedeutung, daß die erste Bohrung 11 gegenüber der zweiten Bohrung 16 exzentrisch versetzt ist. Mit anderen Worten bedeutet dies, daß eine Längsmittelachse 17 der ersten Bohrung 11 nicht mit einer Längsmittelachse 18 der zweiten Bohrung 16 zusammenfällt, sondern parallel zu dieser versetzt ist.

Die erfindungsgemäße Verschlußvorrichtung 12, die in den Meßstutzen 10 einbringbar ist, ist in Fig. 1 dargestellt. Die Verschlußvorrichtung 12 besteht aus einem schraubenförmigen Grundkörper 19, der an seiner äußeren Mantelfläche das Außengewinde 14 trägt. Ein Endstück 20 des Grundkörpers 19 verjüngt sich kegelförmig.

Erfindungsgemäß ist an dem Endstück 20 des Grundkörpers 19 ein Aufsatz 21 angeordnet. Der Aufsatz 21 ist vom Endstück 20 des Grundkörpers 19 über eine Sollbruchstelle 22 getrennt. Innerhalb des Aufsatzes 21 ist eine Bohrung 23 angeordnet. Die Bohrung 23 des Aufsatzes 21 dient der Bildung der eigentlichen Meßbohrung des Gasventils.

Das erfindungsgemäße Zusammenwirken von Verschlußvorrichtung 12 und Meßstutzen 10 zeigen im Detail Figuren 4 bis 6. Fig. 4 zeigt ein teilweise in den Meßstutzen 10 eingebrachte Verschlußeinrichtung 12. Fig. 4 kann entnommen werden, daß die Verschlußeinrichtung 12 über deren Außengewinde 14 in das korrespondierende Innengewinde 13 der ersten Bohrung 11 eingeschraubt wird. Eine Längsmittelachse 24 der Verschlußeinrichtung 12 und die Längsmittelachse 17 der ersten Bohrung 11 fallen zusammen. Wird die Verschlußvorrichtung 12 weiter in den Meßstutzen 10 hineingedreht, so gelangt der Aufsatz 21 in den Bereich der zweiten Bohrung 16. Da die zweite Bohrung 16 gegenüber der ersten Bohrung 10 exzentrisch versetzt angeordnet ist, bedeutet dies, daß bei weiterem Eindrehen der Verschlußeinrichtung 12 in den Meßstutzen 10 der Aufsatz 21 unter Einwirkung von Scherkräften in die zweite Bohrung 16 gepreßt wird. Beim erstmaligen Eindrehen der Verschlußvorrichtung 12 in den Meßstutzen 10 bricht der Aufsatz 21 entlang der Sollbruchstelle 22 vom Grundkörper 19 der Verschlußvorrichtung 12 ab. Dies kann Fig. 5 und 6 in größerem Detail entnommen werden.

Die Bohrung 23 des vom Grundkörper 19 abgetrennten Aufsatzes 21 bildet die eigentliche Meßbohrung des Gasventils. Soll nämlich zum Messen der Druckverhältnisse am Gasventil die Verschlußvorrichtung 12 aus dem Meßstutzen 10 herausgedreht werden, so verbleibt der Aufsatz 21 in der zweiten Bohrung 16.

Die oben beschriebene erfindungsgemäße Ausgestaltung der Verschlußvorrichtung 12 bzw. des Gasventils ermöglicht die Herstellung des Gasventils mit geringeren Kosten. Fertigungstechnisch stellt es nämlich einen wesentlich kleineren Aufwand dar, die erfindungsgemäße Verschlußvorrichtung 12 mit dem später entlang der Sollbruchstelle 22 abzubrechenden Aufsatz 21 herzustellen, als in das Gasventil unter großem Aufwand eine kleine definierte Bohrung einzubringen.

Wie Fig. 6 entnommen werden kann, bildet der Absatz 15 zwischen der ersten Bohrung 11 und der zweiten Bohrung 16 einen Ventilsitz 25, der mit der Außenfläche des Endstücks 20 zusammenwirkt. Bei vollständig eingedrehter Verschlußvorrichtung 12 übernimmt das Endstück 20 in Zusammenwirkung mit dem Ventilsitz 25 die Abdichtung der von der Bohrung 23 gebildeten Meßbohrung nach außen.
Die Erfindung betrifft ein Gasventil sowie eine Verschlußvorrichtung für Gasventile.

Gasventile weisen mindestens einen Meßstutzen auf, wobei der oder jede Meßstutzen über eine entsprechende Verschlußvorrichtung verschließbar ist, wobei die oder jede Verschlußvorrichtung einen Grundkörper mit einem Außengewinde aufweist, über welches die Verschlußvorrichtung in einen Meßstutzen des Gasventils einbringbar ist, und wobei über ein Endstück des Grundkörper die entsprechende Meßbohrung verschließbar ist.

Erfindungsgemäß ist an dem Endstück des Grundkörpers ein die Meßbohrung des Gasventils bildender Aufsatz angeordnet ist, der beim erstmaligen Einbringen der Verschlußvorrichtung in den Meßstutzen vom Grundkörper abtrennbar ist.

## Patentansprüche

1. Verschlußvorrichtung für ein Gasventil, nämlich für einen Meßstutzen (10) eines Gasventils, mit einem ein Außengewinde (14) aufweisenden Grundkörper (19), wobei der Grundkörper (19) über das Außengewinde (14) in den Meßstutzen (10) des Gasventils einbringbar ist und wobei über ein Endstück (20) des Grundkörper (19) eine Meßbohrung des Gasventils verschließbar ist, **dadurch gekennzeichnet, daß** an dem Endstück (20) des Grundkörpers (19) ein die Meßbohrung des Gasventils bildender Aufsatz (21) angeordnet ist, der vom Grundkörper (19) abtrennbar ist und beim erstmaligen Einbringen der Verchlußvorrichtung (12) in den Meßstutzen (10) vom Grundkörper abgetrennt wird.

2. Verschlußvorrichtung nach Anspruch 1, **dadurch gekennzeichnet, daß** der Aufsatz (21) vom Endstück (20) des Grundkörper (19) über eine Sollbruchstelle (22) getrennt ist.

3. Gasventil mit mindestens einem Beßstutzen (10), wobei der oder jede Meßsutzen (10) über eine Verschlußvorrichtung (12) nach Anspruch 1 verschlossen wird.

4. Gasventil nach Anspruch 3, **dadurch gekennzeichnet, daß** der Aufsatz (21) vom Endstück (20) des Grundkörper (19) über eine Sollbruchstelle (22) getrennt ist.

5. Gasventil nach Anspruch 3 oder 4, **gekennzeichnet durch** eine erste, ein Innengewinde (13) aufweisende Bohrung (11), in die der Grundkörper (19) mit dem Außengewinde (14) einbringbar ist, und **durch** eine zweite Bohrung (16), in welcher der Aufsatz (21) nach dem erstmaligen Einbringen der Verschlußvorrichtung (12) verbleibt, wobei die Bohrungen (11,16) exzentrisch zu einander angeordnet sind.

6. Gasventil nach einem oder mehreren der Ansprüche 3 bis 5, **dadurch gekennzeichnet, daß** der Innendurchmesser der zweiten Bohrung (16) kleiner ist als der Innendurchmesser der ersten Bohrung (11), und daß im Übergang zwischen der ersten Bohrung (11) und der zweiten Bohrung (16) ein Ventilsitz (25) ausgebildet ist, der mit dem Endstück (20) des Grundkörper (19) zum Verschließen der Meßbohrung zusammenwirkt.

## Claims

1. Stopper device for a gas valve, specifically: for a gauging connection (10) of a gas valve, with a body (19) having a male thread (14), the body (19) being insertable by means of the male thread (14) into the gauging connection (10) of the valve, and a gauging bore of the valve being closable by an end piece (20) of the body (19), **characterized in that** an extension (21) which forms the gauging bore of the valve and is separable from the body (19), and is separated from the body when the stopper device (12) is inserted into the gauging connection (10) for the first time, is arranged on the end piece (20) of the body (19).

2. Stopper device according to Claim 1, **characterized in that** the extension (21) is parted from the end piece (20) of the body (19) by a predetermined breaking-point (22).

3. Gas valve with at least one gauging connection (10) wherein the (or each) gauging connection (10) is closed off by means of a stopper device (12) according to Claim 1.

4. Gas valve according to Claim 3, **characterized in that** the extension (21) is parted from the end piece (20) of the body (19) by a predetermined breaking-point (22).

5. Gas valve according to Claim 3 or Claim 4, **characterized by** a first bore (11) having a female thread (13) into which the body (19) is insertable with the male thread (14), and by a second bore (16) in which the extension (21) remains after the stopper device (12) is inserted for the first time, the bores (11, 16) being arranged eccentrically with respect to each other.

6. Gas valve according to one or more of Claims 3 to 5, **characterized in that** the internal diameter of the second bore (16) is smaller than the internal diameter of the first bore (11), and **in that** a valve seat (25) cooperating with the end piece (20) of the body (19) to close off the gauging bore is formed at the transition between the first bore (11) and the second bore (16).

## Revendications

1. Dispositif de fermeture pour une soupape à gaz, à savoir pour une tubulure de mesure (10) d'une soupape à gaz, avec un corps de base (19) pourvu d'un filetage (14), le corps de base (19) étant apte à être placé dans la tubulure de mesure (10) de la soupape grâce au filetage (14) et un perçage de mesure de la soupape étant apte à être fermé grâce à une partie d'extrémité (20) du corps de base (19), **caractérisé en ce qu'**il est prévu sur la partie d'extrémité (20) du corps de base (19) un élément rapporté (21) qui forme le perçage de mesure de la soupape à gaz, qui est apte à être séparé du corps de base (19) et qui est séparé de celui-ci lors de la première mise en place du dispositif de fermeture (12) dans la tubulure de mesure (10).

2. Dispositif de fermeture selon la revendication 1, **caractérisé en ce que** l'élément rapporté (21) est séparé de la partie d'extrémité (20) du corps de base (19) grâce à un point de rupture (22).

3. Soupape à gaz avec au moins une tubulure de mesure (10), la ou les tubulures de mesure (10) étant fermées chacune grâce à un dispositif de fermeture (12) selon la revendication 1.

4. Soupape à gaz selon la revendication 3, **caractérisée en ce que** l'élément rapporté (21) est séparé de la partie d'extrémité (20) du corps de base (19) grâce à un point de rupture (22).

5. Soupape à gaz selon la revendication 3 ou 4, **caractérisée par** un premier perçage (11) qui présente un filetage intérieur (13) et dans lequel le corps de base (19) pourvu du filetage extérieur (14) est apte à être placé, et par un second perçage (16) dans lequel l'élément rapporté (21) reste après la première mise en place du dispositif de fermeture (12), les perçages (11, 16) étant disposés de manière excentrée l'un par rapport à l'autre.

6. Soupape à gaz selon l'une au moins des revendications 3 à 5, **caractérisée en ce que** le diamètre intérieur du second perçage (16) est inférieur au diamètre intérieur du premier perçage (11), et **en ce qu'**il est prévu dans la transition entre le premier perçage (11) et le second perçage (16) un siège de soupape (25) qui coopère avec la partie d'extrémité (20) du corps de base (19) pour fermer le perçage de mesure.
